# EUROPÄISCHE PATENTANMELDUNG

(11) **EP 2 505 690 A1**
(43) Veröffentlichungstag der Anmeldung: **03.10.2012**
(21) Anmeldenummer: 11159974.2
(22) Anmeldetag: 28.03.2011
(51) Int. Cl.: C23F 11/173, C09D 5/08, C09D 5/12

(54) **Polymerer Korrosionsinhibitor für metallischen Oberflächen und deren Herstellung**

(71) Anmelder: Straetmans high TAC GmbH, 22143 Hamburg (DE)
(72) Erfinder: Straetmans, Udo Dr., 22143 Hamburg (DE); Soltau, Marko Dr., 22147 Hamburg (DE); Straetmans, Felix, 22143 Hamburg (DE)
(74) Vertreter: Glawe, Delfs, Moll

(57) **Zusammenfassung**

Die Erfindung betrifft einen polymeren Korrosionsinhibitor für ein metallisches Substrat der Formel
(R¹)ₐA(R²X)_{b} wobei
a = 0 - 3,
b = 1 - 6,
A eine Brückenstruktureinheit ist,
R¹ gleich oder verschieden H oder ein aliphatischer, aromatischer, olefinischer, cyclischer, heterocyclischer, polycyclischer oder polyheterocyclischer Rest ist,
R² gleich oder verschieden ein polymeres Grundgerüst ist,
X gleich oder verschieden eine funktionelle Gruppe ist ausgewählt aus der Gruppe bestehend aus Carbonsäuren; Dicarbonsäuren; Polycarbonsäuren; Carbonsäureanhydriden; Carbonsäurechloriden; Carbonsulfonsäuren; sowie Estern, Amiden und Imiden der vorgenannten Gruppen,
die Molmasse des Polymers zwischen 200 und 10.000, vorzugsweise 400 und 6.000 liegt. Die Erfindung betrifft ferner die Verwendung eines polymeren Korrosionsinhibitors zur Behandlung von Metalloberflächen, ein Verfahren zur Behandlung von Metalloberflächen sowie ein Verfahren zur Herstellung eines polymeren Korrosionsinhibitors.

## Beschreibung

Die Erfindung betrifft einen polymeren Korrosionsinhibitor für ein metallisches Substrat, die Verwendung eines polymeren Korrosionsinhibitors zur Behandlung von Metalloberflächen, ein Verfahren zur Behandlung von Metalloberflächen sowie ein Verfahren zur Herstellung eines polymeren Korrosionsinhibitors.

Die Korrosion an metallischen Bauteilen ist ein erhebliches Problem und kann zur Beeinträchtigung der Funktionalität des Bauteils führen. Besonderes Augenmerk findet der Korrosionsschutz von Aluminium und dessen Legierungen aufgrund der weiten Verbreitung von Aluminium in der Luftfahrt- und teilweise auch in der Autoindustrie. Zur Hemmung bzw. Verhinderung von Korrosion ist es bekannt, die Metalloberfläche mit einer korrosionsinhibierenden Schutzschicht zu überziehen. Ein besonders effektiver Korrosionsschutz für viele Metalle, insbesondere Aluminium, wurde lange durch eine Beschichtung mit Chromat erreicht. Chromate sind in der Regel giftig, Chrom(VI) gilt als krebserzeugend. Die Verwendung von Chrom(VI) als Korrosionsinhibitor ist deshalb mittlerweile verboten. Ersatzformulierungen (z. B. Chrom(III), Zinkphosphat, andere anorganische Korrosionsschutzpigmente etc.) zeigen zumeist nicht die guten korrosionsinhibierenden Eigenschaften von Chrom(VI) und/oder sind teilweise metallspezifisch, so dass ein breiter Multimetallschutz nicht erreicht werden kann. Auch begegnen einige Korrosionsinhibitoren im Stand der Technik gesundheitlichen und/oder ökologischen Bedenken. Es besteht somit ein Bedarf an alternativen Formulierungen, die einen effektiven Korrosionsschutz bieten.

Organische Korrosionsinhibitoren sind Chemikalien, die auf Metalloberflächen stark und teilweise spezifisch adsorbieren und teilweise sogar nach chemischer Reaktion anbinden können. Sie können zu einer gewissen Versiegelung führen und so eine Barrierewirkung aufbauen oder auch anodische oder kathodische Korrosionsreaktionen hemmen. Diese Korrosionsinhibitoren liegen meist in Form schwacher Säuren und ihrer Derivate vor, die auf der Metalloberfläche unlösliche Salze bilden.

Die meisten organischen Inhibitoren sind relativ kleine Moleküle, die auf der Metalloberfläche meist dicke unorganisierte Schichten ausbilden, bei denen der Schutzmechanismus auf Physisorption beruht. Nachteilig daran ist, dass diese Schichten leicht abrasiv ablösbar sind oder ausschließlich durch ihre Wasserunlöslichkeit wirken. Im letzteren Fall müssen die Korrosionsinhibitoren mit Lösungsmittel appliziert werden.

Organische Korrosionsinhibitoren sind von konventionellen organischen Farb- bzw. Lackschutzschichten zu unterscheiden. Letztere weisen zumeist nur eine unzureichende Barrierewirkung gegenüber korrosionsfördernden Stoffen auf. Aus diesem Grund werden konventionelle Farb- bzw. Lackschichten ganz überwiegend nicht direkt auf die Metalloberfläche aufgetragen, sondern zumeist auf eine in der Regel korrosionsinhibierende Substanzen enthaltende Primerschicht. Bei der Primerschicht kann es sich um eine Lackschicht handeln, die Korrosionsinhibitoren als Additive enthält.

Ferner ist die Verwendung von leitfähigen Polymeren als Korrosionsschutzmittel bekannt. Nachteilig an leitfähigen Polymeren ist, dass Beschichtungen meist nur sehr aufwändig (z. B. mittels Elektropolymerisation) auf das Substrat aufbringbar sind.

Es ist die Aufgabe der vorliegenden Erfindung, einen Korrosionsinhibitor für ein metallisches Substrat bereitzustellen, der eine gute korrosionsinhibierende Wirkung zeigt und einfach zu applizieren ist.

Gelöst wird diese Aufgabe durch den Gegenstand der unabhängigen Ansprüche. Vorteilhafte Weiterbildungen sind in den abhängigen Ansprüchen genannt.

Die Erfindung hat erkannt, dass ein erfindungsgemäßer Korrosionsinhibitor auf Metalloberflächen eine dünne, langzeitstabile Polymerschicht ausbildet, die eine gute korrosionsinhibierende Wirkung zeigt.

Überraschenderweise wurde gefunden, dass es sich bei der Polymerschicht um eine im Wesentlichen monomolekulare, geordnete, chemisorbierte Schicht handeln kann, deren Dicke im Wesentlichen von der Größe der Makromoleküle bestimmt wird. Dies war nicht zu erwarten, da die organischen Korrosionsinhibitoren des Standes der Technik meist dicke, unorganisierte, physisorbierte Schichten ausbilden und Polymere aufgrund ihrer geringen Beweglichkeit normalerweise eher träge reagieren.

Dünne, chemisorbierte Schichten bieten mehrere Vorteile. Zum einen sind chemisorbierte Schichten langzeitstabil, d.h. sie sind im Vergleich zu physisorbierten Schichten schwerer abrasiv ablösbar. Zum anderen benötigt man verhältnismäßig wenig Korrosionsinhibitor, um einen korrosionsinhibierenden Film auf der Metalloberfläche aufzubauen. Ein weiterer Vorteil für viele Anwendungen liegt zudem darin, dass dünne Schichten die Oberflächengeometrie weniger stark beeinflussen als dicke Schichten. Bei dicken Beschichtungen wird die Oberflächengeometrie weitgehend durch die Beschichtung bestimmt. Geometrische Merkmale der Metalloberfläche, deren Abmessungen kleiner oder vergleichbar der Schichtdicke sind, werden von der Beschichtung in der Regel weitgehend verdeckt. Bei einer dünnen Schicht, deren Dicke deutlich kleiner ist als die Abmessungen der Merkmale, ist dies nicht im gleichen Maße gegeben. Überraschenderweise zeigt der erfindungsgemäße Korrosionsinhibitor eine weitgehend unselektive Wirkung auf Metallen und eignet sich somit hervorragend für den Multimetallschutz.

Zunächst seien einige im Rahmen der Erfindung verwendete Begriffe erläutert.

Der Begriff Korrosionsinhibitor bezeichnet eine Substanz, die die Korrosion von Metallen verlangsamen, hemmen oder verhindern kann.

Ein polymerer Korrosionsinhibitor weist wenigstens ein polymeres Grundgerüst auf, das wenigstens zwei miteinander verknüpfte Monomereinheiten aufweist. Hierbei kann es sich um die gleichen Monomereinheiten (Homopolymer), z. B. Ethoxy-Einheiten, oder um ungleiche Monomereinheiten (Co-Polymer), z. B. Ethoxy- und Propoxy-Einheiten, handeln.

Die Begriffe "Polymer", "Monomereinheit" und "Monomer" sind im Rahmen der Erfindung wie in der REACH-Verordnung (EG) Nr. 1907/2006 veröffentlicht am 30.12.2006 im Amtsblatt der Europäischen Union Nr. 396 S. 54 definiert.

Ein erfindungsgemäßer polymerer Korrosionsinhibitor kann bis zu sechs polymere Grundgerüste aufweisen, die über eine Brückenstruktureinheit miteinander verknüpft sind. Im Rahmen der Erfindung bezeichnet der Begriff Brückenstruktureinheit ein nichtpolymeres organisches Strukturelement, mit dem das wenigstens eine polymere Grundgerüst verknüpft ist. Der Ausgangspunkt für die Brückenstruktureinheit kann ein Startermolekül für die Polymerisation, beispielsweise ein Alkohol oder Polyol wie z. B. Glycerin oder Dipentaerithrol, sein, wobei die Brückenstruktureinheit nicht zwangsläufig als ehemaliges Startermolekül identifizierbar sein muss. Die Brückenstruktureinheit kann auch ein C-Atom sein, mit dem das wenigstens eine polymere Grundgerüst verknüpft ist.

Ein erfindungsgemäßer polymerer Korrosionsinhibitor weist die folgende Formel auf:
(R¹)ₐA(R²X)_{b}
wobei
a = 0 - 3,
b = 1 - 6,

A eine Brückenstruktureinheit ist,
R¹ gleich oder verschieden H oder ein aliphatischer, aromatischer, olefinischer, cyclischer, heterocyclischer, polycyclischer oder polyheterocyclischer Rest ist,
R² gleich oder verschieden ein polymeres Grundgerüst ist,
X gleich oder verschieden eine funktionelle Gruppe ist ausgewählt aus der Gruppe bestehend aus Carbonsäuren; Dicarbonsäuren; Polycarbonsäuren; Carbonsäureanhydriden; Carbonsäurechloriden; Carbonsulfonsäuren; sowie Estern, Amiden und Imiden der vorgenannten Gruppen,
die Molmasse des Polymers zwischen 200 und 10.000, vorzugsweise 400 und 6.000 liegt.

Bei den angegebenen Molmassen handelt es sich, wie bei Polymeren üblich, um mittlere Molmassen.

Im Rahmen der Definition des Begriffs Polymers kann ein erfindungsgemäßer polymerer Korrosionsinhibitor Nebenprodukte wie beispielsweise Restmengen an Katalysator oder nicht reagierte Monomere enthalten. Die Erfindung hat erkannt, dass diese Nebenprodukte die Wirkung des polymeren Korrosionsinhibitors nicht negativ beeinflussen.

Das polymere Grundgerüst R² kann bevorzugt Ethoxy- (EO), Propoxy- (PO), Butoxy- (BO), (CH₂)ₙ-NH-(CH₂)ₘ (mit n, m von 0 bis 10) -Einheiten oder Mischungen dieser Einheiten aufweisen. In einer bevorzugten Ausführungsform ist das polymere Grundgerüst R² ein Homopolymer von Ethoxy-Einheiten, ein Co-Polymer auf Basis einer Mischung von Ethoxy- und Propoxy-Einheiten, oder ein Homopolymer von Propoxy-Einheiten.

Vorzugsweise umfasst das Grundgerüst R² 3 bis 200, besonders bevorzugt 5 bis 100 Monomereinheiten. Das polymere Grundgerüst kann verzweigt sein, vorteilhafterweise handelt es sich jedoch um ein lineares Grundgerüst.

Vorteilhafterweise weist der polymere Korrosionsinhibitor 2 bis 6, vorzugsweise 2 bis 3, besonders bevorzugt 3 polymere Grundgerüste auf, d.h. bezogen auf die obige Formel: b = 2-6, vorzugsweise 2-3, besonders bevorzugt 3.

Es ist bevorzugt, dass X gleich oder verschieden eine funktionelle Gruppe ist ausgewählt aus der Gruppe bestehend aus Carbonsäuren; Dicarbonsäuren; Polycarbonsäuren; Carbonsäureanhydriden; sowie Amiden und Imiden der vorgenannten Gruppen.

In einer besonders bevorzugten Ausführungsform handelt es sich bei der funktionellen Gruppe X um
-NR'-R" oder -O-R " wobei
R' ein aliphatischer, aromatischer, olefinischer, cyclischer, heterocyclischer, polycyclischer oder polyheterocyclischer Rest oder ein derivatisierter Acyl-Rest ist und
R" = H oder R' ist.

Erfindungsgemäße polymere Korrosionsinhibitoren können nach einem Verfahren mit den folgenden Schritten hergestellt werden:
a) Bereitstellen eines Polymers der Formel
   (R¹)ₐA(R²Y)_{b} wobei
   a = 0 - 3,
   b = 1 - 6, vorzugsweise 2 - 6, weiter vorzugsweise 2 - 3, besonders bevorzugt 3,
   A eine Brückenstruktureinheit ist,
   R¹ gleich oder verschieden H oder ein aliphatischer, aromatischer, olefinischer, cyclischer, heterocyclischer, polycyclischer oder polyheterocyclischer Rest ist,
   R² gleich oder verschieden ein polymeres Grundgerüst ist,
   Y gleich oder verschieden eine funktionelle Gruppe ist ausgewählt aus der Gruppe bestehend aus - OR, -NHR, -NR₂, wobei R gleich oder verschieden H oder ein aliphatischer, aromatischer, olefinischer, cyclischer, heterocyclischer, polycyclischer oder polyheterocyclischer Rest, vorzugsweise gleich H, ist
   die Molmasse des Polymers so gewählt ist, dass die Molmasse des polymeren Korrosionsinhibitors zwischen 200 und 10.000, vorzugsweise 400 und 6.000 liegt,
b) Veresterung bzw. Amidierung oder Imidierung der funktionellen Gruppe Y mit Carbonsäuren, Dicarbonsäuren, Polycarbonsäuren, Carbonsäureanhydriden, Carbonsäurechloriden oder Carbonsulfonsäuren; sowie Estern, Amiden und Imiden der vorgenannten Gruppen.

Das polymere Grundgerüst R² des Polymers in Schritt a) kann bevorzugt Ethoxy- (EO), Propoxy- (PO), Butoxy- (BO), (CH₂)ₙ-NH-(CH₂)ₘ (mit n, m von 0 bis 10) -Einheiten oder Mischungen dieser Einheiten aufweisen. Vorteilhafterweise ist das polymere Grundgerüst R² ein Homopolymer von Ethoxy-Einheiten, ein Co-Polymer auf Basis einer Mischung von Ethoxy- und Propoxy-Einheiten, oder ein Homopolymer von Propoxy-Einheiten.

Die in Schritt a) genannten Polymere sind marktgängig (beispielsweise die von den Firmen Huntsman und BASF vertriebenen Polyetheramine) und/oder können nach dem Fachmann bekannten Methoden hergestellt werden. Die Reaktionen des Schritts b) sind literaturbekannt.

Der erfindungsgemäße polymere Korrosionsinhibitor kann nicht vollständig durchreagierte bzw. nicht vollständig umgesetzte funktionelle Gruppen am polymeren Grundgerüst aufweisen. Die Erfindung hat erkannt, dass die Wirkung des polymeren Korrosionsinhibitors dadurch nicht negativ beeinflusst wird.

Gegenstand der Erfindung ist ferner die Verwendung eines erfindungsgemäßen polymeren Korrosionsinhibitors zur Behandlung von Metalloberflächen, vorzugsweise von Oberflächen eines Metalls, das ausgewählt ist aus der Gruppe bestehend aus Eisen, Stahl, Aluminium, Kupfer, Zink, Magnesium, Nickel, Titan und deren Legierungen. Besonders bevorzugt ist das Metall ausgewählt aus der Gruppe bestehend aus Aluminium und dessen Legierungen.

Ein weiterer Gegenstand der Erfindung ist ein Verfahren zur Behandlung einer Metalloberfläche umfassend das Inkontaktbringen der Metalloberfläche mit einem erfindungsgemäßen polymeren Korrosionsinhibitor. Vorzugsweise ist das Metall ausgewählt aus der Gruppe bestehend aus Eisen, Stahl, Aluminium, Kupfer, Zink, Magnesium, Nickel, Titan und deren Legierungen, vorzugsweise aus der Gruppe bestehend aus Aluminium und dessen Legierungen.

Der erfindungsgemäße Korrosionsinhibitor kann aus Lösemittel bevorzugt aber aus einer wässrigen Dispersion, bzw. Emulsion heraus appliziert werden. Vorteilhafterweise kann es sich um eine niedrig dosierte Dispersion oder Emulsion handeln. In einer beispielhaften Ausführungsform kann eine Dispersion etwa 0,01 bis 4 Gew.-%, vorzugsweise 0,1 bis 0,4 Gew.-% polymeren Korrosionsinhibitor enthalten. In einer anderen beispielhaften Ausführungsform kann eine Emulsion etwa 0,01 bis 4 Gew.-%, vorzugsweise 0,1 bis 0,4 Gew.-% polymeren Korrosionsinhibitor enthalten.

Die Dispersion bzw. Emulsion kann Additive enthalten. Dabei handelt es sich vorteilhafterweise um weitere Korrosionsinhibitoren, wie aus dem Stand der Technik bekannte anorganische Pigmente, z.B. Zink- , Ca-, und Aluminiumpigmente als Phosphate, Silicate bzw. deren Kombinationen. Bevorzugt enthält die Dispersion Zinkphosphat als Additiv. Mögliche Additive sind außerdem weitere organische Inhibitoren wie Sulfonate, Phosphate, Phosphonate.

Es ist ebenfalls möglich, den erfindungsgemäßen Korrosionsinhibitor mit Hilfe physikalischer Applikationsverfahren, z.B. anodische und kathodische Verfahren, elektrophoretische Tauchlackierung, thermische Abbinde- und Fixierungsverfahren auf das Substrat aufzubringen.

Bevorzugt wird im Rahmen des Verfahrens auf der Metalloberfläche eine Polymerschicht mit den folgenden Merkmalen aufgebracht:
a. einer Dicke von ≤ 50 nm, vorzugsweise ≤ 30 nm, besonders bevorzugt etwa 10 nm; und/oder
b. einer Belegung der Metalloberfläche mit dem Polymer von ≤ 2,5 mg/m², vorzugsweise ≤ 1,5 mg/m² besonders bevorzugte ≤ 1 mg/m².

Die Erfindung hat erkannt, dass mit dem erfindungsgemäßen polymeren Korrosionsinhibitor einerseits auf der Metalloberfläche erheblich dünnere Schichten als im Stand der Technik üblich ausgebildet werden können und andererseits eine verbesserte korrosionsinhibierende Wirkung erzielt wird.

Ein erfindungsgemäßer Korrosionsinhibitor kann auch als Additiv in einer Lack- oder Farbformulierung enthalten sein. Lacke, die erfindungsgemäßen Korrosionsinhibitor enthalten, können bei der Behandlung von Metalloberflächen beispielsweise als Primer verwendet werden.

Ferner ist ein Metallwerkstück, erhältlich durch das oben genannte Verfahren zur Behandlung einer Metalloberfläche Gegenstand der Erfindung. Der Begriff Metallwerkstück umfasst jedes im Stand der Technik bekannte Material, das eine Metalloberfläche aufweist. Bevorzugt ist das Metall ausgewählt aus der Gruppe bestehend aus Eisen, Stahl, Aluminium, Kupfer, Zink, Magnesium, Nickel, Titan und deren Legierungen. Besonders bevorzugt ist das Metall ausgewählt aus der Gruppe bestehend aus Aluminium und dessen Legierungen. Vorteilhafterweise weist das Metallwerkstück eine Polymerschicht mit den folgenden Merkmalen auf:
a. einer Dicke von ≤ 50 nm, vorzugsweise ≤ 30 nm, besonders bevorzugt etwa 10 nm; und/oder
b. einer Belegung der Metalloberfläche mit dem Polymer von ≤ 2,5 mg/m², vorzugsweise ≤ 1,5 mg/m² besonders bevorzugt ≤ 1 mg/m².

Die Erfindung wird nachstehend anhand von Ausführungsbeispielen erläutert. Zunächst werden verschiedene Mess- und Prüfverfahren erläutert, anschließend folgen Beispiele und Vergleichsbeispiele.

### I. Schichtdicke

Die Dicke der auf der Metalloberfläche angeordneten Polymerschicht wird mittels Röntgenphotoelektronenspektroskopie (XPS) bestimmt. Diese Methode erlaubt zudem Rückschlüsse auf die atomare Zusammensetzung der Schicht.

### II. Korrosionstests

Für alle Korrosionstests wurden genormte Probenplatten verwendet:
a) Probenplatten der Firma Q-Labs Deutschland GmbH des Typs QD aus Stahl mit folgender Materialspezifikation: ISO 3574 Typ CR1, CRS SAE 1008/1010, 0.5 mm dick, glatte Oberfläche
b) Probenplatten der Firma Rocholl GmbH des Typs AR aus Aluminium mit folgender Materialspezifikation: ISO 209-1, Legierung 2024 T3 bare, 1,5 mm dick, unbelegte Oberfläche

### 1. Salzsprühtest

Der Salzsprühtest wurde in einer Salzsprühkammer entsprechend ISO 9227 (Hersteller VLM GmbH) nach DIN 51.021 SS durchgeführt.

### 2. Salzlagerungstest

Probenplatten wurden für eine bestimmte Zeitdauer bei Raumtemperatur zur Hälfte in Salzwasser, d.h. 3% NaCl-Lösung, eingetaucht.

### III. Beispiele und Vergleichsbeispiele

Ohne Einschränkung der Allgemeinheit wird die Erfindung nachfolgend anhand von mehreren Beispielen näher erläutert.

### Beispiel 1

### Polymerer Korrosionsinhibitor 1:

Ein Polymer mit einem durchschnittlichen Molekulargewicht von ca. 4300 der Formel
(R¹)ₐA(R²Y)_{b} wobei
A = -CH₂-CH₂-,
a = 0,
b = 2,
Y eine OH-Gruppe,
das polymere Grundgerüst R² ein EO/PO Blockcopolymer ist,
wird mit einer equimolaren Menge einer Polycarbonsäure (Polymaleinsäure) katalytisch verestert. Die polymere Estercarbonsäure PEC wird mit Amin, vorzugsweise Triethanolamin (TEA), neutralisiert.

### Polymerer Korrosionsinhibitor 2:

Ein Polymer mit einem mittleren Molekulargewicht von ca. 6000 der Formel
(R¹)ₐA(R²Y)_{b} wobei
A = -CH₂-CH-CH₂-,
a = 0,
b = 3,
Y eine NH₂-Gruppe,
das polymere Grundgerüst R² ein Homopolymer von Propoxy-Einheiten ist,
wird mit einer equifunktionalen Menge Polymaleinsäureanhydrid amidiert. Diese Polyamidocarbonsäure PAC wird mit Amin, vorzugsweise Triethanolamin (TEA), neutralisiert.

### Beispiel 2

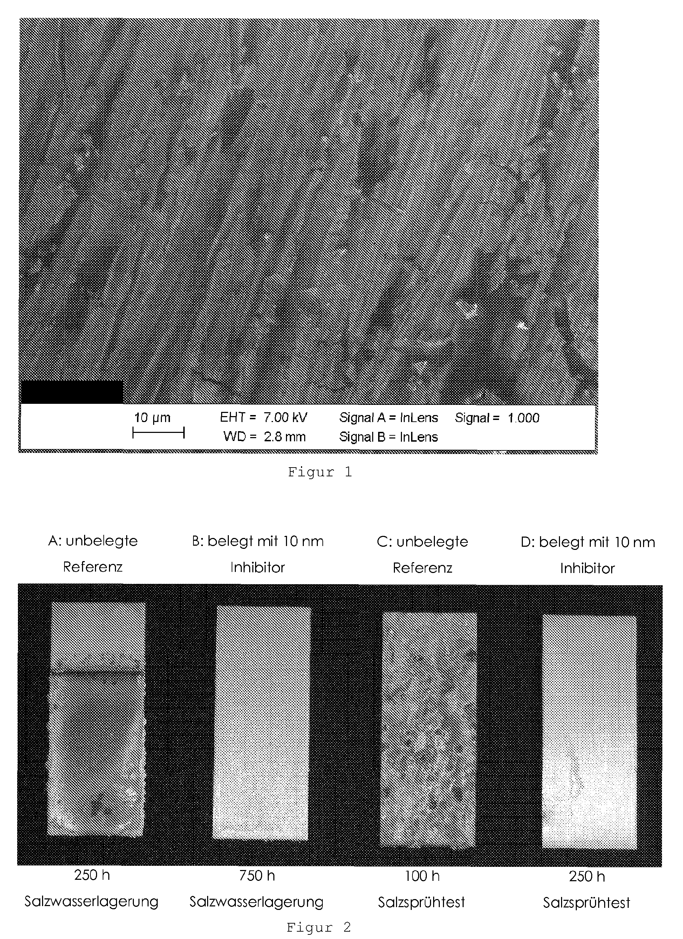

Figur 1 zeigt in einer Rasterelektronenmikroskop-Aufnahme eine frisch angeschliffene und anschließend mit Korrosionsinhibitor 2 belegte Aluminium-Probenplatte Typ AR 2024 T3 bare. Zur Belegung wurde die Probenplatte für eine Stunde in eine Emulsion enthaltend 0,4 Gew.-% Korrosionsinhibitor 2 getaucht und anschließend bei Raumtemperatur getrocknet.

Der Maßstab beträgt 10 µm, während die mittels XPS-Messung ermittelte Schichtdicke des Inhibitors um ein Tausendstel geringer ist.

### Beispiel 3

Figur 2 zeigt vier Aluminium-Probenplatte Typ AR 2024 T3 bare. Die Probenplatten B und D wurden mit Korrosionsinhibitor 2 wie unter Beispiel 2 angegeben belegt. Die Dicke der Polymerschicht beträgt jeweils etwa 10 nm. Die Probenplatten wurden vor der Belegung mit einem Schleifmittel der Körnung 400 frisch angeschliffen. Probenplatten A und C wurden nicht mit Korrosionsinhibitor behandelt und dienen als Vergleichsbeispiele. Diese Referenzplatten wurden ebenfalls frisch angeschliffen. Platte B (erfindungsgemäß) wurde für 750 h in Salzwasser gelagert. Die Referenzplatte A wurde für lediglich 250 h in Salzwasser gelagert. Platte D (erfindungsgemäß) wurde für 250 h einem Salzsprühtest unterzogen. Platte C (Referenz) wurde lediglich für 100 h einem Salzsprühtest unterzogen. Für die mit dem erfindungsgemäßen Inhibitor belegten Platten B und D wurden Oxidationsprozesse auf der Metalloberfläche weitgehend unterbunden, während sich auf der Referenzplatte eine Aluminiumoxid-Schicht ausbildete. Durch XPS-Messungen konnte bestätigt werden, dass sich die Polymerschicht bei den Korrosionstests kaum veränderte und kaum Aluminiumoxid gebildet wurde.

### Beispiel 4

Folgende drei Zusammensetzungen wurden hergestellt (V1: Vergleichsformulierung, F1 und F2 mit erfindungsgemäßem Korrosionsinhibitor).

| | **Produkt (Hersteller)** | **V1 (Gew.-%)** | **F1 (Gew.-%)** | **F2 (Gew.-%)** |
|---|---|---|---|---|
| **Komponente A** | | | | |
| Acryl | Macrynal VSM 2896, 60% (Solutia, jetzt Cytec) | 38,40 | 38,40 | 38,40 |
| Losungsmittel | Methoxypropylacetat | 3, 05 | 3, 05 | 3, 05 |
| Losungsmittel | Butylacetat | 9,20 | 9,20 | 9,20 |
| Losungsmittel | Solvesso 100 (Exxon) | 3, 05 | 3, 05 | 3, 05 |
| | | | | |
| Zinkphosphat (Korrosions-schutzpigment) | | 10, 10 | 5, 05 | - |
| Korrosionsinhi-bitor 1 | | - | 2, 00 | - |
| Korrosionsinhi-bitor 2 | | - | - | 2, 00 |
| Magnesiumsili-kat | Micro-Talc A. T. Extra (Mondo Minerals) | 5, 05 | 10,1 | 13,15 |
| TiO₂ | Kemira 650 (Kemira) | 5, 90 | 5, 90 | 5, 90 |
| Bariumsulfat | Blanc Fixe micro (Sachtleben) | 14,15 | 14,15 | 14,15 |
| Losungsmittel | Methoxypropylacetat | 4,20 | 2,20 | 4,20 |
| | Wacker HDK H 15 (Wacker) | 0,50 | 0,50 | 0,50 |
| *Mit einer Perlmuhle vermahlen*, *Korngroße* < *15 Mikrometer* | | | | |

| **Komponente B** | | | | |
|---|---|---|---|---|
| Harter | Desmodur N 75, 75% (Bayer) | 6,40 | 6,40 | 6,40 |
| Mix. | | 100 | 100 | 100 |

Auf drei Probenplatten aus Stahl wurde jeweils nass eine 90µm dicke Schicht der Formulierungen V1, F1 und F2 aufgetragen und bei Raumtemperatur getrocknet. Die Dicke der getrockneten Schicht betrug etwa 60µm. Sodann wurden die Schicht und die Metalloberfläche T-förmig eingeritzt (sog. T-Schnitt). Dies dient dazu, eine künstliche Fehlstelle und damit einen Angriffspunkt für die Korrosion zu schaffen, wie sie im normalen Betrieb eines Bauteils, z. B. durch Kratzer im Lack, entstehen kann. Die so behandelten Probenplatten wurden für 504 h einem Salzsprühtest unterzogen.

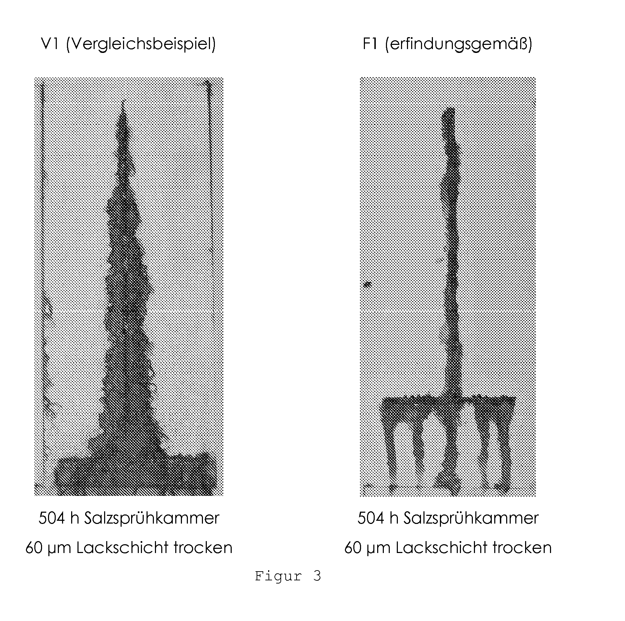

Figur 3 vergleicht die mit der Vergleichsformulierung V1 behandelte Probenplatte mit der mit der Formulierung F1 behandelten Probenplatte.

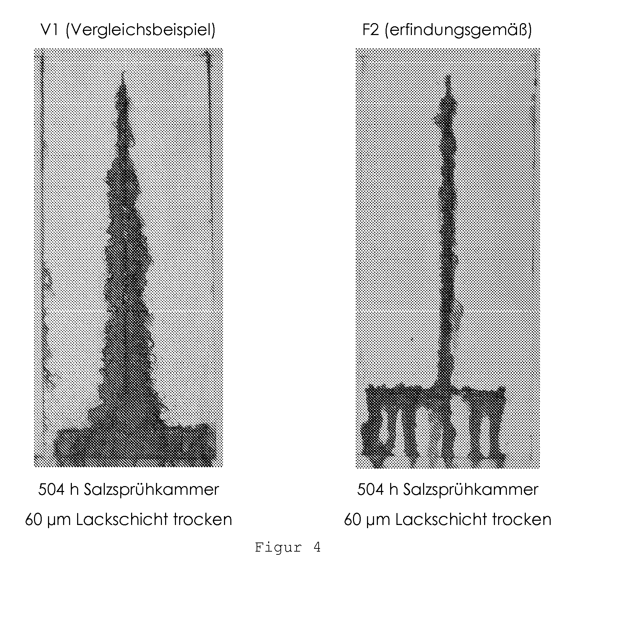

Figur 4 vergleicht die mit der Vergleichsformulierung V1 behandelte Probenplatte mit der mit der Formulierung F2 behandelten Probenplatte.

Während die mit der Vergleichsformulierung (Korrosionsschutzpigment Zinkphosphat) behandelte Probenplatte ausgehend von der Fehlstelle eine starke korrosive Unterwanderung der Lackschicht zeigt, ist für die mit den Formulierungen F1 und F2 behandelten Probenplatten höchstens eine geringfügige Unterwanderung der Lackschicht festzustellen.

## Patentansprüche

1. Polymerer Korrosionsinhibitor für ein metallisches Substrat der Formel
(R¹)ₐA(R²X)_{b} wobei
a = 0 - 3,
b = 1 - 6,
A eine Brückenstruktureinheit ist,
R¹ gleich oder verschieden H oder ein aliphatischer, aromatischer, olefinischer, cyclischer, heterocyclischer, polycyclischer oder polyheterocyclischer Rest ist,
R² gleich oder verschieden ein polymeres Grundgerüst ist,
X gleich oder verschieden eine funktionelle Gruppe ist ausgewählt aus der Gruppe bestehend aus Carbonsäuren; Dicarbonsäuren; Polycarbonsäuren; Carbonsäureanhydriden; Carbonsäurechloriden; Carbonsulfonsäuren; sowie Estern, Amiden und Imiden der vorgenannten Gruppen,
die Molmasse des Polymers zwischen 200 und 10.000, vorzugsweise 400 und 6.000 liegt.

2. Polymerer Korrosionsinhibitor nach Anspruch 1, **dadurch gekennzeichnet, dass** das polymere Grundgerüst R² Ethoxy- (EO), Propoxy- (PO), Butoxy- (BO), (CH₂)ₙ-NH-(CH₂)ₘ (mit n, m von 0 bis 10) -Einheiten oder Mischungen dieser Einheiten aufweist.

3. Polymerer Korrosionsinhibitor nach Anspruch 1 oder 2, **dadurch gekennzeichnet, dass** das polymere Grundgerüst R² ein Homopolymer von Ethoxy-Einheiten, ein Co-Polymer auf Basis einer Mischung von Ethoxy- und Propoxy-Einheiten, oder ein Homopolymer von Propoxy-Einheiten ist.

4. Polymerer Korrosionsinhibitor nach einem der Ansprüche 1 bis 3, **dadurch gekennzeichnet, dass** das Grundgerüst R² 3 bis 200, vorzugsweise 5 bis 100 Monomereinheiten umfasst und/oder dass für den Index b gilt:
b = 2-6, vorzugsweise 2-3.

5. Polymerer Korrosionsinhibitor nach einem der Ansprüche 1 bis 4, **dadurch gekennzeichnet, dass** X gleich oder verschieden eine funktionelle Gruppe ist ausgewählt aus der Gruppe bestehend aus Carbonsäuren; Dicarbonsäuren; Polycarbonsäuren; Carbonsäureanhydriden; sowie Amiden und Imiden der vorgenannten Gruppen.

6. Polymerer Korrosionsinhibitor nach einem der Ansprüche 1 bis 5, **dadurch gekennzeichnet, dass**
X = -NR'-R " oder -O-R " wobei
R' = ein aliphatischer, aromatischer, olefinischer, cyclischer, heterocyclischer, polycyclischer oder polyheterocyclischer Rest oder ein derivatisierter Acyl-Rest,
R" = H oder R' ist.

7. Verwendung eines polymeren Korrosionsinhibitors nach einem der Ansprüche 1 bis 6 zur Behandlung von Metalloberflächen, vorzugsweise von Oberflächen eines Metalls, das ausgewählt ist aus der Gruppe bestehend aus Eisen, Stahl, Aluminium, Kupfer, Zink, Magnesium, Nickel, Titan und deren Legierungen, besonders bevorzugt von Oberflächen eines Metalls, das ausgewählt ist aus der Gruppe bestehend aus Aluminium und dessen Legierungen.

8. Verfahren zur Behandlung einer Metalloberfläche umfassend das Inkontaktbringen der Metalloberfläche mit einem polymeren Korrosionsinhibitor nach einem der Ansprüche 1 bis 6.

9. Verfahren nach Anspruch 8, **dadurch gekennzeichnet, dass** das Metall ausgewählt ist aus der Gruppe bestehend aus Eisen, Stahl, Aluminium, Kupfer, Zink, Magnesium, Nickel, Titan und deren Legierungen, vorzugsweise aus der Gruppe bestehend aus Aluminium und dessen Legierungen.

10. Verfahren nach einem der Ansprüche 8 oder 9, **dadurch**
**gekennzeichnet, dass** der polymere Korrosionsinhibitor aus einer Dispersion heraus appliziert wird.

11. Verfahren nach einem der Ansprüche 8 bis 10, **dadurch**
**gekennzeichnet, dass** auf der Metalloberfläche eine Polymerschicht mit den folgenden Merkmalen aufgebracht wird:
a. einer Dicke von ≤ 50 nm, vorzugsweise ≤ 30 nm, besonders bevorzugt etwa 10 nm; und/oder
b. einer Belegung der Metalloberfläche mit dem Polymer von ≤ 2,5 mg/m², vorzugsweises ≤ 1,5 mg/m² besonders bevorzugt ≤ 1 mg/m².

12. Metallwerkstück, erhältlich durch ein Verfahren nach einem der Ansprüche 8 bis 11.

13. Verfahren zur Herstellung eines polymeren Korrosionsinhibitors mit den Schritten:
a) Bereitstellen eines Polymers der Formel
(R¹)ₐA(R²Y)_{b} wobei
a = 0 - 3,
b = 1 - 6, vorzugsweise 2 - 6, besonders bevorzugt 2 - 3,
A eine Brückenstruktureinheit ist,
R¹ gleich oder verschieden H oder ein aliphatischer, aromatischer, olefinischer, cyclischer, heterocyclischer, polycyclischer oder polyheterocyclischer Rest ist,
R² gleich oder verschieden ein polymeres Grundgerüst ist,
Y gleich oder verschieden eine funktionelle Gruppe ist ausgewählt aus der Gruppe bestehend aus - OR, -NHR, -NR₂, wobei R gleich oder verschieden H oder ein aliphatischer, aromatischer, olefinischer, cyclischer, heterocyclischer, polycyclischer oder polyheterocyclischer Rest, vorzugsweise gleich H, ist
die Molmasse des Polymers so gewählt ist, dass die Molmasse des polymeren Korrosionsinhibitors zwischen 200 und 10.000, vorzugsweise 400 und 6.000 liegt,
b) Veresterung bzw. Amidierung oder Imidierung der funktionellen Gruppe Y mit Carbonsäuren, Dicarbonsäuren, Polycarbonsäuren, Carbonsäureanhydriden, Carbonsäurechloriden oder Carbonsulfonsäuren; sowie Estern, Amiden und Imiden der vorgenannten Gruppen.

14. Verfahren nach Anspruch 13, **dadurch gekennzeichnet, dass** das polymere Grundgerüst R² Ethoxy- (EO), Propoxy- (PO), Butoxy- (BO), (CH₂)ₙ-NH-(CH₂)ₘ (mit n, m von 0 bis 10) -Einheiten oder Mischungen dieser Einheiten aufweist.

15. Verfahren nach Anspruch 14, **dadurch gekennzeichnet, dass** das polymere Grundgerüst R² ein Homopolymer von Ethoxy-Einheiten, bevorzugt ein Co-Polymer auf Basis einer Mischung von Ethoxy- und Propoxy-Einheiten, besonders bevorzugt ein Homopolymer von Propoxy-Einheiten ist.
